# EUROPÄISCHE PATENTSCHRIFT

(11) **EP 1 026 873 B1**
(45) Veröffentlichungstag und Bekanntmachung des Hinweises auf die Patenterteilung: **19.04.2006**
(21) Anmeldenummer: 99102303.7
(22) Anmeldetag: 05.02.1999
(51) Int. Cl.: H04M 7/00, H04Q 3/00

(54) **Verfahren zum Einrichten einer Verbindung zwischen zwei Kommunikationseinrichtungen über ein IP-orientiertes Netz**
Method for establishing a connection between two communication arrangements over an IP-oriented network
Procédé pour l' etablissment d' une connection entre deux systémes de communications via un réseau orienté IP

(43) Veröffentlichungstag der Anmeldung: 09.08.2000
(73) Patentinhaber: SIEMENS AKTIENGESELLSCHAFT, 80333 München (DE)
(72) Erfinder: Schönfeld, Norbert, Dipl.-Ing., 44145 Dortmund (DE)

(56) Entgegenhaltungen:
- WO-A-98/11704
- WO-A-98/37665
- WO-A-98/44703
- WO-A-98/48542

## Beschreibung

Aufgrund einer zunehmenden globalen Ausrichtung von Unternehmen nimmt die Nutzung von Telekommunikationsdiensten zur Übermittlung von Sprache und Daten ständig zu. Dies hat zur Folge, daß die durch diese Telekommunikationsdienste verursachten Kosten ständig steigen und zu einem erheblichen Kostenfaktor für die Unternehmen werden, die Möglichkeiten zur Reduzierung dieser Kosten suchen.

Eine Möglichkeit diese Kosten zu reduzieren besteht in dem sogenannten 'Least Cost Routing'-Verfahren, bei dem im Rahmen eines Verbindungsaufbaus automatisch der kostengünstigste Verbindungsweg zwischen zwei Kommunikationsteilnehmern ausgewählt wird. Aus dem Artikel "Kostensenken mit System - Least Cost Routing", IK, Heft 48, Berlin, 1998, Seite 23, ist beispielsweise ein sogenannter 'Least Cost Router' zum Anschluß an eine Telekommunikationsanlage bekannt, der im Rahmen eines Verbindungsaufbaus zwischen zwei Kommunikationsendgeräten verbindungsindividuell den für die einzurichtende Kommunikationsverbindung günstigsten Kommunikationsnetzanbieter ermittelt und die Vorwahl des ermittelten Kommunikationsnetzanbieters automatisch vor die am rufenden Kommunikationsendgerät eingegebene Rufnummer anfügt.

Eine weitere Möglichkeit Daten kostengünstig und weltweit übermitteln zu können, bieten globale Computernetzwerke, wie beispielsweise das sogenannte 'Internet'. Aus dem Artikel von Michael Wagner: "Szenarien der Internet-Telefonie", NTZ, Heft 5, 1998, Seiten 48 - 49, ist es beispielsweise bekannt, eine Übermittlung von Sprachdaten zwischen zwei Kommunikationsteilnehmern über das 'Internet' bzw. das sogenannte 'Intranet' eines Unternehmens zu realisieren. Eine Verbindung zweier - jeweils einem Kommunikationsteilnehmer zugeordneter - herkömmlicher Telefone über das 'Internet' bzw. das 'Intranet' erfolgt dabei mittels spezieller, einen Zugang zum 'Internet' bzw. 'Intranet' realisierenden Einrichtungen, sogenannter 'Interworking Units' - in der Literatur häufig auch mit 'Telefony Internet Server' TIS bezeichnet. Der rufende Kommunikationsteilnehmer wählt zunächst die ihm zugeordnete - über ein herkömmliches Fernsprechnetz mit dem rufenden Telefon, bzw. mit der, dem rufenden Telefon zugeordneten Telekommunikationsanlage verbundene - erste 'Interworking Unit' an und teilt dieser die Adresse des gerufenen Telefons mit. Die erste 'Interworking Unit' ermittelt anhand der übermittelten Adresse des gerufenen Telefons eine Adresse - die IP-Adresse (Internet Protokoll) - einer, dem gerufenen Telefon, bzw. der dem gerufenen Telefon zugeordneten Kommunikationsanlage zugeordneten zweiten 'Interworking Unit'. Ausgehend von der ersten 'Interworking Unit' wird anschließend mittels der ermittelten IP-Adresse eine Verbindung über das 'Internet' bzw. 'Intranet' zu der zweiten 'Interworking Unit' aufgebaut, welche ihrerseits eine Verbindung über ein herkömmliches Fernsprechnetz mit dem gerufenen Telefon, bzw. mit der, dem gerufenen Telefon zugeordneten Telekommunikationsanlage aufbaut.

Eine Verbindung der beiden Kommunikationsteilnehmer über das 'Internet' bzw. 'Intranet' ist dabei jedoch nur möglich, wenn einerseits die IP-Adresse der zweiten, dem gerufenen Telefon zugeordneten 'Interworking Unit' in der ersten 'Interworking Unit' bekannt ist und wenn andererseits die, dem gerufenen Telefon zugeordnete Kommunikationsanlage zum Zeitpunkt des Verbindungsaufbaus einen aktivierten Zugang zum 'Internet' bzw. 'Intranet' besitzt, d.h. wenn das gerufene Telefon `online' ist.

Die Druckschrift WO 98/11704 Lee et al. "Dedicated System and Process for Distributed Communication on a Packet-Switched Network" zeigt eine Kommunikationsanordnung, bei der Telefongespräche wahlweise über ein leitungsvermitteltes Kommunikationsnetzwerk oder ein paketvermitteltes Kommunikationsnetzwerk (beispielsweise das Internet) übertragen werden können.

Der vorliegenden Erfindung liegt die Aufgabe zugrunde, ein alternatives Verfahren anzugeben, durch welches eine Verbindung zwischen zwei Kommunikationseinrichtungen über ein IP-orientiertes Netz eingerichtet werden kann, so daß für die Aktivierung des Zugangs zum IP-orienterten Netz keine zusätzlichen kosten entstehen.

Die Lösung der Aufgabe erfolgt erfindungsgemäß mit den Merkmalen des Patentanspruchs 1.

Ein wesertlicher Vorteil des erfindungsgemäßen Verfahrens besteht darin, daß die Aktivierung des Zugangs der gerufenen Teilnehmereinrichtung zum IP-orientierten Netz durch ein Anwählen eines bestimmten Anschlußports einer, die gerufene Kommunikationseinrichtung mit einem Kommunikationsnetz verbindenden Kommunikationsanlage und durch einen, von der Kommunikationsanlage veranlaßten nachfolgenden Rufabbruch ausgelöst wird, so daß für die Akti-vierung des Zugangs zum IP-orientierten Netz keine zusätzlichen Kosten entstehen.

Vorteilhafte Weiterbildungen der Erfindung sind in den Unteransprüchen angegeben. -

Ein weiterer Vorteil von in den Unteransprüchen definierten Ausgestaltungen der Erfindung besteht darin, daß durch ein Anmelden der, der gerufenen Kommunikationseinrichtung zugeordneten Kommunikationsanlage an einer, am IP-orientierten Netz angeschlossenen Registrierungseinheit - in der Literatur häufig als 'Internet Location Server' ILS bezeichnet - auch in Fällen, in denen der Kommunikationsanlage keine netzimmanente IP-Adresse im IP-orientierten Netz zugeordnet ist, durch ein Zuweisen einer dynamischen, im wesentlichen für die Dauer der Anmeldung gültigen IP-Adresse durch die Registrie-rungseinheit eine Verbindung über das IP-orientierte Netz zur Kommunikationsanlage aufgebaut werden kann.

Ein Ausführungsbeispiel der Erfindung wird im folgenden anhand der Zeichnung näher erläutert.

Dabei zeigen:
- Fig. 1:: ein Strukturbild zur schematischen Darstellung der an dem erfindungsgemäßen Verfahren beteiligten wesentlichen Funktionseinheiten;
- Fig. 2:: ein Ablaufdiagramm zur Veranschaulichung der auf der Senderseite ablaufenden wesentlichen Verfahrensschritte;
- Fig. 3:: ein Ablaufdiagramm zur Veranschaulichung der auf der Empfängerseite ablaufenden wesentlichen Verfahrensschritte.

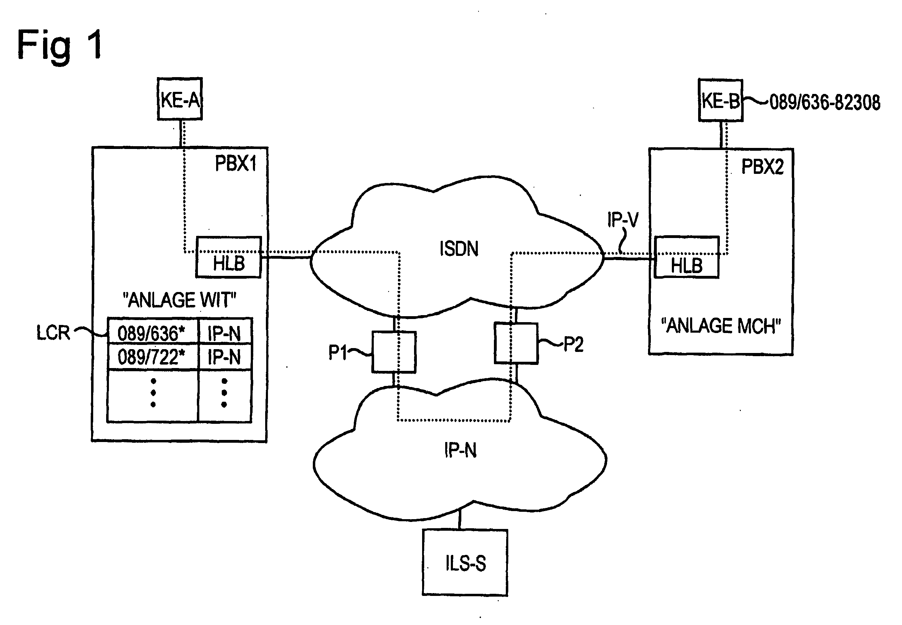

Fig. 1 zeigt eine schematische Darstellung einer ersten Kommunikationsanlage PBX1 (Private Branch Exchange) mit einer, dieser Kommunikationsanlage PBX1 zugeordneten, eindeutigen Identifizierung "ANLAGE WIT" und einer zweiten Kommunikationsanlage PBX2 mit einer, dieser Kommunikationsanlage PBX2 zugeordneten, eindeutigen Identifizierung "ANLAGE MCH" die jeweils über eine Anschlußbaugruppe HLB mit einem ISDN-orientierten Kommunikationsnetz ISDN (Integrated Services Digital Network) verbunden sind. Ein Anschluß des ISDN-orientierten Kommunikationsnetzes ISDN an die erste und die zweite Kommunikationsanlage PBX1; PBX2 erfolgt beispielsweise über einen Primärmultiplexanschluß - in der Literatur auch als S_{2M-}Schnittstelle bezeichnet -, der im allgemeinen 30 Nutzdatenkanäle, welche als ISDN-orientierte B-Kanäle mit einer übertragungsrate von jeweils 64 kBit/s ausgestaltet sind und einen Signalisierungskanal, welcher als ISDN-orientierter D-Kanal mit einer Übertragungsrate von 64 kBit/s ausgestaltet ist, umfaßt.

An die erste Kommunikationsanlage PBX1 ist ein erstes Kommunikationsendgerät KE-A und an die zweite Kommunikationsanlage PBX2 ist ein zweites Kommunikationsendgerät KE-B mit der dem zweiten Kommunikationsendgerät KE-B zugeordneten, im ISDN-orientierten Kommunikationsnetz ISDN eindeutigen Rufnummer 089/636-82308 angeschlossen. In der ersten Kommunikationsanlage PBX1 ist des weiteren eine Tabelle LCR (Least Cost Routing) mit Rufnummerninformationen gespeichert, für die im Rahmen eines, ausgehend von der ersten Kommunikationsanlage PBX1 initialisierten Verbindungsaufbaus das sogenannte 'Least Cost Routing'-Verfahren angewendet werden soll. Beispielhaft sind zwei Rufnummerninformationen 089/636* und 089/722* dargestellt, für die eine Verbindung über ein IP-orientiertes Netz IP-N, wie beispielsweise über das globale sogenannte 'Internet' oder über ein unternehmeninternes sogenanntes 'Intranet' vorgesehen ist.

Anhand der in der Tabelle gespeicherten Information ist festgelegt, daß in Fällen in denen an einem, an der ersten Kommunikationsanlage PBX1 angeschlossenen Kommunikationsendgerät eine Rufnummer beginnend mit der Rufnummerninformation 089/636 oder 089/722 eingegeben wird - beispielsweise die Rufnummer 089/636-82308 des zweiten Kommunikationsendgerätes KE-B - versucht wird, eine Verbindung zwischen dem rufenden und dem gerufenen Kommunikationsendgerät über ein IP-orientiertes Netz IP-N aufzubauen.

Im vorliegenden Ausführungsbeispiel ist das ISDN-orientierte Kommunikationsnetz ISDN über Zugangseinrichtungen P1, P2 - in der Literatur häufig mit 'Provider' bezeichnet - mit einem IP-orientierten Netz IP-N verbunden. Hierbei ist eine erste Zugangseinrichtung P1 der ersten Kommunikationsanlage PBX1 und eine zweite Zugangseinrichtung P2 der zweiten Kommunikationsanlage PBX2 zugeordnet. Alternativ besteht jedoch auch die Möglichkeit einen direkten Anschluß der ersten und der zweiten Kommunikationsanlage PBX1; PBX2 an das IP-orientierte Netz IP-N zu realisieren. Ist für die erste und die zweite Kommunikationsanlage PBX1; PBX2 ein Zugang zum IP-orientierten Netz IP-N aktiviert, d.h. ist den Anschlußbaugruppen HLB der ersten und der zweiten Kommunikationsanlage PBX1; PBX2 jeweils eine eindeutige IP-Adresse IP-A im IP-orientierten Netz IP-N zugeordnet, so kann anhand dieser IP-Adressen IP-A eine Verbindung IP-V zwischen der ersten und der zweiten Kommunikationsanlage PBX1; PBX2 über die erste Zugangseinrichtung P1, das IP-orientierte Netz IP-N und die zweite Zugangseinrichtung P2 eingerichtet werden.

Für eine Verbindung der ersten Kommunikationsanlage PBX1 mit der ersten Zugangseinrichtung P1 bzw. für eine Verbindung der zweiten Kommunikationsanlage PBX2 mit der zweiten Zugangseinrichtung P2 über das ISDN-orientierte Kommunikationsnetz ISDN fallen für einen, eine derartige Verbindung initialisierenden Teilnehmer im allgemeinen jeweils nur Gebühren in Höhe eines Ortsgespräches an. Somit entstehen für einen, eine Verbindung IP-V zwischen der ersten und der zweiten Kommunikationsanlage PBX1; PBX2 über das IP-orientierte Netz IP-N initialisierenden Kommunikationsteilnehmer unabhängig von der geographischen Lage der ersten und der zweiten Kommunikationsanlage PBX1; PBX2 im allgemeinen nur Gebühren in Höhe eines doppelten Ortsgespräches.

An dem IP-orientierten Netz IP-N ist beispielhaft eine Registrierungseinheit ILS-S - in der Literatur häufig als 'Internet Location Server' ILS bezeichnet - angeschlossen. Im allgemeinen weist ein IP-orientiertes Netz IP-N jedoch eine Vielzahl derartiger Registrierungseinheiten ILS-S auf. Ist einer Kommunikationsanlage PBX1, PBX2, bzw. der einen Anschluß an das ISDN-orientierte Kommunikationsnetz ISDN realisierenden Anschlußbaugruppe HLB dieser Kommunikationsanlage PBX1, PBX2 keine netzimmanente IP-Adresse IP-A im IP-orientierten Netz IP-N zugeordnet, erfolgt im Rahmen einer Aktivierung eines Zugangs zum IP-orientierten Netz IP-N gleichzeitig eine Anmeldung der entsprechenden Kommunikationsanlage PBX1, PBX2 an der Registrierungseinheit ILS-S - in der Literatur häufig als ILS-Registrierung bezeichnet. Hierbei übermittelt eine Kommunikationsanlage PBX1, PBX2 die ihr zugeordnete Identifizierung "ANLAGE MCH","ANLAGE WIT" an die Registrierungseinheit ILS-S, welche die Identifizierung "ANLAGE MCH","ANLAGE WIT" dieser Kommunikationsanlage PBX1, PBX2 zusammen mit einer durch die entsprechende Zugangseinrichtung P1, P2 vergebenen temporären IP-Adresse IP-A in einer - nicht dargestellten - Tabelle der Registrierungseinheit ILS-S als einander zugehörig speichert.

Durch eine Übermittlung einer, die Identifizierung "ANLAGE MCH","ANLAGE WIT" einer Kommunikationsanlage PBX1, PBX2 beinhaltende Abfragenachricht an die Registrierungseinheit ILS-S ist die temporäre IP-Adresse IP-A für die Dauer der Anmeldung von einer beliebigen Kommunikationseinrichtung aus abrufbar. Die temporäre IP-Adresse IP-A ist zusätzlich eine - durch die Zugangseinrichtung P1, P2 - vorgebbare Zeitspanne nach einem Abmelden einer Kommunikationsanlage PBX1, PBX2 an der Registrierungseinheit ILS-S gültig, so daß einer Kommunikationsanlage PBX1, PBX2, bzw. der Anschlußbaugruppe HLB dieser Kommunikationsanlage PBX1; PBX2 bei einer innerhalb dieser Zeitspanne erfolgenden erneuten Aktivierung des Zugangs dieser Kommunikationsanlage PBX1, PBX2 zum IP-orientierten Netz IP-N dieselbe IP-Adresse IP-A zugeordnet wird.

Im Rahmen eines Aufbaus einer Verbindung zwischen einem rufenden Kommunikationsendgerät zu einem gerufenen Kommunikationsendgerät wobei der, dem gerufenen Kommunikationsendgerät zugeordneten Kommunikationsanlage keine netzimmanente IP-Adresse IP-A im IP-orientierten Kommunikationsnetz IP-N zugeordnet ist, übermittelt die dem rufenden Kommunikationsendgerät zugeordnete Kommunikationsanlage eine sogenannte, die Identifizierung der, dem gerufenen Kommunikationsendgerät zugeordneten Kommunikationsanlage enthaltende Abfragenachricht an die Registrierungseinheit ILS-S. Infolge einer empfangenen Abfragenachricht ermittelt die Registrierungseinheit ILS-S anhand der übermittelten Identifizierung die, im Rahmen einer bereits erfolgten ILS-Registrierung zugeordnete, temporäre IP-Adresse IP-A der, dem gerufenen Kommunikationsendgerät zugeordneten Kommunikationsanlage und übermittelt diese an den Absender der Abfragenachricht, der mittels dieser temporären IP-Adresse IP-A eine Verbindung IP-V zum gerufenen Kommunikationsendgerät über das IP-orientierte Netz IP-N aufbauen kann.

Im folgenden wird von einem Verbindungsaufbau ausgehend von dem ersten Kommunikationsendgerät KE-A über das IP-orientierte Netz IP-N zum zweiten Kommunikationsendgerät KE-B ausgegangen.

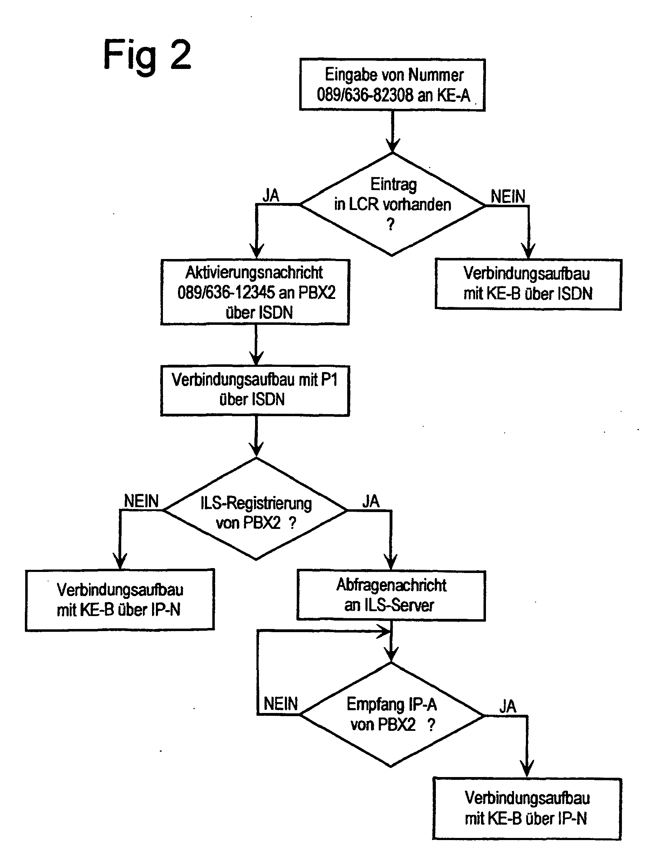

Fig. 2 zeigt ein Ablaufdiagramm zur Veranschaulichung der im Rahmen eines Verbindungsaufbaus an der ersten Kommunikationsanlage PBX1 ablaufenden wesentlichen Verfahrensschritte.

Nach Eingabe einer, das zweite Kommunikationsendgerät KE-B identifizierenden Rufnummer 089/636-82308 am ersten Kommunikationsendgerät KE-A erfolgt in der ersten Kommunikationsanlage PBX1 eine Überprüfung der eingegebenen Rufnummer dahingehend, ob in der Tabelle LCR eine, die Rufnummer 089/636-82308 identifizierende Rufnummerninformation eingetragen ist. Ist dies nicht der Fall, so wird eine Verbindung zwischen dem ersten Kommunikationsendgerät KE-A und dem zweiten Kommunikationsendgerät in herkömmlicher Weise über das ISDN-orientierte Kommunikationsnetz ISDN aufgebaut.

Ist in der Tabelle LCR eine, die eingegebene Rufnummer 089/636-82308 identifizierende Rufnummerninformation 089/636* eingetragen, so wird überprüft, nach welchen Kriterien - z.B. Verbindungsaufbau über einen bestimmten Netzanbieter, Verbindungsaufbau über das IP-orientierte Netz IP-N, usw. - das 'Least Cost Routing'-Verfahren ausgeführt werden soll. Soll eine Verbindung IP-V zwischen dem ersten Kommunikationsendgerät KE-A und dem zweiten Kommunikationsendgerät KE-B über das IP-orientierte Netz IP-N aufgebaut werden, sendet die erste Kommunikationsanlage PBX1 eine Aktivierungsnachricht 089/636-12345 an die zweite Kommunikationsanlage PBX2 über das ISDN-orientierte Kommunikationsnetz ISDN, d.h. die erste Kommunikationsanlage PBX1 startet einen Verbindungsaufbau mit einem, durch die Zieladresse 089/636-82308 identifizierten, bestimmten Anschlußport (12345) der zweiten Kommunikationsanlage PBX2.

Nach Übermittlung der Aktivierungsnachricht 089/636-12345 an die zweite Kommunikationsanlage PBX2 leitet die erste Kommunikationsanlage PBX1 einen Verbindungsaufbau mit der ersten Zugangseinrichtung P1 ein, die der ersten Kommunikationsanlage PBX1, bzw. der Anschlußbaugruppe HLB der ersten Kommunikationsanlage PBX1 eine IP-Adresse IP-A im IP-orientierten Netz IP-N zuweist. In Fällen, in denen der Anschlußbaugruppe HLB der ersten Kommunikationsanlage PBX1 eine netzimmanente IP-Adresse IP-A im IP-orientierten Netz IP-N zugeordnet ist, kann ab diesem Zeitpunkt eine Verbindung IP-V über das IP-orientierte Netz IP-A unter Beteiligung des ersten Kommunikationsendgerätes KE-A aufgebaut werden, d.h. das erste Kommunikationsendgerät KE-A ist ab diesem Zeitpunkt 'online'.

In Fällen, in denen der Anschlußbaugruppe HLB der ersten Kommunikationsanlage PBX1 keine netzimmanente IP-Adresse IP-A im IP-orientierten Netz IP-N zugeordnet ist, wird im Zuge des Verbindungsaufbaus mit der ersten Zugangseinrichtung P1 eine Anmeldung der ersten Kommunikationsanlage PBX1 mit der Identifizierung "ANLAGE WIT" an der Registrierungseinheit ILS-S gestartet, d.h. es erfolgt eine ILS-Registrierung der ersten Kommunikationsanlage PBX1 an der Registrierungseinheit ILS-S. Hierbei übermittelt die erste Kommunikationsanlage PBX1 die ihr zugeordnete Identifizierung "ANLAGE WIT" an die Registrierungseinheit ILS-S, welche die Identifizierung "ANLAGE WIT" zusammen mit der durch die erste Zugangseinrichtung P1 vergebene temporäre IP-Adresse IP-A in einer - nicht dargestellten - Tabelle der Registrierungseinheit ILS-S als einander zugehörig speichert.

In einem nächsten Schritt überprüft die erste Kommunikationsanlage PBX1, ob die Anschlußbaugruppe HLB der zweiten Kommunikationsanlage PBX2 eine netzimmanente IP-Adresse IP-A im IP-orientierten Netz IP-N besitzt und ob diese IP-Adresse IP-A in der ersten Kommunikationsanlage PBX1 bekannt ist. Ist der Anschlußbaugruppe HLB der zweiten Kommunikationsanlage PBX2 eine netzimmanente IP-Adresse IP-A im IP-orientierten Netz IP-N zugeordnet, d.h. die zweite Kommunikationsanlage PBX2 ist nicht an der Registrierungseinheit ILS-S registriert, so wird mittels der netzimmanenten IP-Adresse IP-A der Anschlußbaugruppe HLB der zweiten Kommunikationsanlage PBX2 ausgehend von der ersten Kommunikationsanlage PBX1 eine Verbindung IP-V zwischen dem ersten Kommunikationsendgerät KE-A und dem zweiten Kommunikationsendgerät KE-B über das IP-orientierte Netz IP-N aufgebaut.

Ist der Anschlußbaugruppe HLB der zweiten Kommunikationsanlage PBX2 dagegen keine netzimmanente IP-Adresse IP-A im IP-orientierten Netz IP-N zugeordnet, d.h. die zweite Kommunikationsanlage PBX2 ist an der Registrierungseinheit ILS-S registriert, so wird in einem nächsten Schritt eine Abfragenachricht mit der Identifizierung "ANLAGE MCH" der zweiten Kommunikationsanlage PBX2 an die Registrierungseinheit ILS-S übermittelt. Die Registrierungseinheit ILS-S ermittelt anhand der Identifizierung "ANLAGE MCH" die, der zweiten Kommunikationsanlage PBX2 im Rahmen einer bereits erfolgten ILS-Registrierung zugeordnete temporäre IP-Adresse IP-A der Anschlußbaugruppe HLB der zweiten Kommunikationsanlage PBX2 und übermittelt diese an die erste Kommunikationsanlage PBX1. Mittels der empfangenen temporären IP-Adresse IP-A der zweiten Kommunikationsanlage PBX2 wird ausgehend von der ersten Kommunikationsanlage PBX1 eine Verbindung IP-V zwischen dem ersten Kommunikationsendgerät KE-A und dem zweiten Kommunikationsendgerät KE-B über das IP-orientierte Netz IP-N aufgebaut.

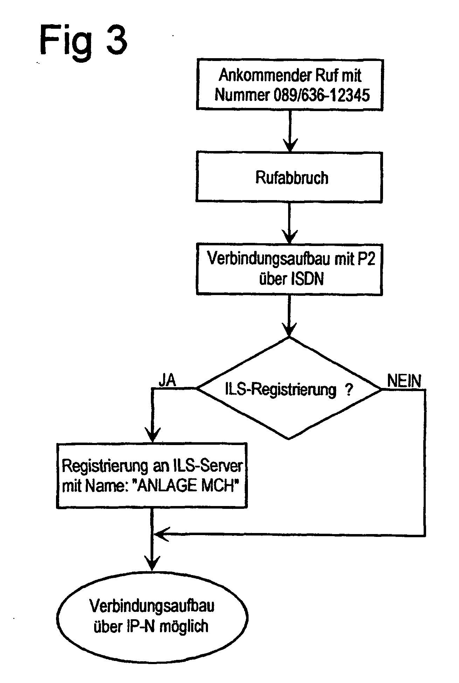

Fig. 3 zeigt ein Ablaufdiagramm zur Veranschaulichung der im Rahmen eines Verbindungsaufbaus an der zweiten Kommunikationsanlage PBX2 ablaufenden wesentlichen Verfahrensschritte.

Nach Eintreffen eines Rufes mit der Rufnummer 089/636-12345, d.h. nach Eintreffen der Aktivierungsnachricht an der zweiten Kommunikationsanlage PBX2 bricht diese den ankommenden Ruf ab. Dies hat zur Folge, daß für den ankommenden Ruf keine Gebühren entstehen. Als Reaktion auf das Eintreffen des Rufes mit der Rufnummer 089/636-12345 leitet die zweite Kommunikationsanlage PBX2 einen Verbindungsaufbau mit der zweiten Zugangseinrichtung P2 ein, die der zweiten Kommunikationsanlage PBX2, bzw. der Anschlußbaugruppe HLB der zweiten Kommunikationsanlage PBX2 eine IP-Adresse IP-A im IP-orientierten Netz IP-N zuweist. Ist der Anschlußbaugruppe HLB der zweiten Kommunikationseinrichtung PBX2 eine netzimmanente IP-Adresse IP-A im IP-orientierten Netz IP-N zugeordnet, so ist ab diesem Zeitpunkt mittels der netzimmanenten IP-Adresse IP-A ein Verbindungsaufbau mit der zweiten Kommunikationsanlage PBX2 über das IP-orientierte Netz IP-N möglich, d.h. das zweite Kommunikationsendgerät KE-A ist ab diesem Zeitpunkt 'online'.

Ist der Anschlußbaugruppe HLB der zweiten Kommunikationseinrichtung PBX2 keine netzimmanente IP-Adresse IP im IP-orientierten Netz IP-N zugeordnet, so erfolgt eine Anmeldung der zweiten Kommunikationsanlage PBX2 an der Registrierungseinheit ILS-S mittels der Identifizierung "ANLAGE MCH" der zweiten Kommunikationsanlage PBX2. Hierbei übermittelt die zweite Kommunikationsanlage PBX2 die ihr zugeordnete Identifizierung "ANLAGE MCH" an die Registrierungseinheit ILS-S, welche die Identifizierung "ANLAGE MCH" zusammen mit der durch die zweite Zugangseinrichtung P2 vergebene temporäre IP-Adresse IP-A in einer - nicht dargestellten - Tabelle der Registrierungseinheit ILS-S speichert. Somit ist in diesem Fall das zweite Kommunikationsendgerät KE-A ab diesem Zeitpunkt ebenfalls 'online'. Mittels der temporären IP-Adresse IP-A der Anschlußbaugruppe HLB der zweiten Kommunikationsanlage PBX2 ist nun ausgehend vom ersten Kommunikationsendgerät KE-A ein Verbindungsaufbau mit dem zweiten Kommunikationsendgerät KE-B über das IP-orientierte Netz IP-N möglich.

## Patentansprüche

1. Verfahren zum Einrichten einer Verbindung (IL-V) zwischen zwei Kommunikationseinrichtungen (PBX1, PBX2) über ein IP-orientiertes Netz (IP-N),
wobei nach Zuleiten einer, eine gerufene Kommunikationseinrichtung (PBX2) identifizierenden Rufnummer zu einer rufenden Kommunikationseinrichtung (PBX1) eine Aktivierungsnachricht über ein, die rufende und die gerufene Kommunikationseinrichtung (PBX1, PBX2) verbindendes Kommunikationsnetz (ISDN) an die gerufene Kommunikationseinrichtung (PBX2) übermittelt wird,
wobei nach dem Zuleiten ein Zugang von der rufenden Kommunikationseinrichtung (PBX1) zum IP-orientierten Netz (IP-N) und nach Empfang der Aktivierungsnachricht ein Zugang von der gerufenen Kommunikationseinrichtung (PBX2), zum IP-orientierten Netz (IP-N) aktiviert wird, und
wobei nach Aktivierung der Zugänge die Verbindung (IL-V) zwischen den Kommunikationseinrichtungen (PBX1, PBX2) über das IP-orientierte Netz (IP-N) eingerichtet wird,
**dadurch gekennzeichnet,**
**daß** die Aktivierungsnachricht durch ein über das Kommunikationsnetz (ISDN) geführtes Anwählen eines bestimmten Anschlußports (12345) in der gerufenen Kommunikationseinrichtung (PBX2) realisiert wird,
wobei der durch das Anwählen initiierte Ruf nach dessen Registrierung durch die zweite Kommunikationsanlage (PBX2) beendet wird.

2. Verfahren nach Anspruch 1,
**dadurch gekennzeichnet,**
**daß** die Verbindung (IL-V) ausgehend von der rufenden Kommunikationseinrichtungen (PBX1) über das IP-orientierten Netz
(IP-N) zur gerufenen Kommunikationseinrichtungen (PBX2) eingerichtet wird

3. Verfahren nach Anspruch 1 oder 2,
**dadurch gekennzeichnet,**
**daß** ein Verbindungsaufbau über das IP-orientierte Netz (IP-N) in den Fällen erfolgt, in denen für eine Verbindung mit der, durch die eingegebene Rufnummer identifizierten Kommunikationseinrichtung (PBX2) eine Verbindung über das IP-orientierte Netz (IP-N) freigegeben ist, und
**daß** in anderen Fällen ein Verbindungsaufbau über das Kommunikationsnetz (ISDN) erfolgt.

4. Verfahren nach Anspruch 3,
**dadurch gekennzeichnet,**
**daß** eine Überprüfung, ob ein Verbindungsaufbau über das IP-orientierte Netz (IP-N) freigegeben ist mittels einer, in der rufenden Kommunikationseinrichtung (PBX1) gespeicherten Tabelle (LCR) mit für einen Verbindungsaufbau über das IP-orientierte Netz (IP-N) freigegebenen Rufnummern, erfolgt.

5. Verfahren nach einem der vorhergehenden Ansprüche,
**dadurch gekennzeichnet,**
**daß** eine Verbindung der Kommunikationseinrichtungen (PBX1, PBX2) mit dem IP-orientierten Netz (IP-N) über jeweils eine, das Kommunikationsnetz (ISDN) mit dem IP-orientierten Netz (IP-N) verbindende Zugangseinrichtung (P1, P2) erfolgt, und daß eine Aktivierung eines Zugangs einer Kommunikationseinrichtung (PBX1, PBX2) zum IP-orientierten Netz (IP-N) durch ein über das Kommunikationsnetz (ISDN) geführtes Anwählen der jeweiligen Zugangseinrichtung (P1, P2) erfolgt.

6. Verfahren nach Anspruch 5,
**dadurch gekennzeichnet,**
**daß** bei einer Aktivierung des Zugangs der rufenden Kommunikationseinrichtung (PBX1) zum IP-orientierten Netz (IP-N) einer den Anschluß an das Kommunikationsnetz (ISDN) realisierenden Anschlußbaugruppe (HLB) der rufenden Kommunikationseinrichtung (PBX1) durch eine erste Zugangseinrichtung (P1) eine eindeutige erste IP-Adresse (IP-A) im IP-orientierten Netz (IP-N) und bei einer Aktivierung des Zugangs der gerufenen Kommunikationseinrichtung (PBX2) zum IP-orientierten Netz (IP-N) einer den Anschluß an das Kommunikationsnetz (ISDN) realisierenden Anschlußbaugruppe (HLB) der gerufenen Kommunikationseinrichtung (PBX2) durch eine zweite Zugangseinrichtung (P2) eine eindeutige zweite IP-Adresse (IP-A) im IP-orientierten Netz (IP-N) zugewiesen wird.

7. Verfahren nach Anspruch 6,
**dadurch gekennzeichnet,**
**daß** in Fällen, in denen der Anschlußbaugruppe (HLB) der gerufenen Kommunikationseinrichtung (PBX2) eine netzimmanente zweite IP-Adresse (IP-A) im IP-orientierten Netz (IP-N) zugeordnet ist und diese zweite IP-Adresse (IP-A) in der rufenden Kommunikationseinrichtung (PBX1) hinterlegt ist, unmittelbar nach der Aktivierung der Zugänge zum IP-orientierten Netz (IP-N) die Verbindung (IP-V) zwischen der rufenden Kommunikationseinrichtung (PBX1) und der gerufenen Kommunikationseinrichtung (PBX2) über das IP-orientierte Netz (IP-N) mittels der zweiten IP-Adresse (IP-A) aufgebaut wird.

8. Verfahren nach Anspruch 6,
**dadurch gekennzeichnet,**
**daß** in Fällen, in denen der Anschlußbaugruppe (HLB) der gerufenen Kommunikationseinrichtung (PBX2) keine netzimmanente zweite IP-Adresse (IP-A) im IP-orientierten Netz (IP-N) zugeordnet ist, mit der Aktivierung des Zugangs der gerufenen Kommunikationseinrichtung (PBX2) zum IP-orientierten Netz (IP-N) durch die gerufene Kommunikationseinrichtung (PBX2) mittels einer individuellen, die gerufene Kommunikationseinrichtung (PBX2) bezeichnenden Identifizierung (ANLAGE MCH) eine Anmeldung der gerufenen Kommunikationseinrichtung (PBX2) an einer am IP-orientierten Netz (IP-N) angeschlossenen Registrierungseinheit (ILS-S) erfolgt.

9. Verfahren nach Anspruch 8,
**dadurch gekennzeichnet,**
**daß** bei der Anmeldung der gerufenen Kommunikationseinrichtung (PBX2) eine temporäre zweite IP-Adresse (IP-A) zusammen mit der, die gerufene Kommunikationseinrichtung (PBX2)bezeichnenden Identifizierung (ANLAGE MCH) in der Registrieruhgseinheit (ILS-S) gespeichert wird, und
**daß** die temporäre zweite IP-Adresse (IP-A) für einen Verbindungsaufbau über das IP-orientierte Netz (IP-N) von der rufenden Kommunikationseinrichtung (PBX1) mittels der Identifizierung (ANLAGE MCH) von der Registrierungseinheit (ILS-S) abfragbar ist.

## Claims

1. Method for establishing a connection (IL-V) between two communication arrangements (PBX1, PBX2) over an IP-oriented network (IP-N),
in which, following the supply of a phone number identifying a called communication arrangement (PBX2) to a calling communication arrangement (PBX1), an activation message is transmitted to the called communication arrangement (PBX2) over a communications network (ISDN) connecting the calling and the called communication arrangement (PBX1, PBX2),
in which, following said supply, an access is activated from the calling communication arrangement (PBX1) to the IP-oriented network (IP-N), and following reception of the activation message, an access from the called communication arrangement (PBX2) to the IP-oriented network (IP-N) is activated, and
in which, following activation of the accesses, the connection (IL-V) between the communication arrangements (PBX1, PBX2) is established over the IP-oriented network (IP-N),
**characterized in that** the activation message is realized by dialing a specific connection port (12345) in the called communication arrangement (PBX2) over the communications network (ISDN),
wherein the call initiated by the dialing is terminated following its registration by the second communication system (PBX2).

2. Method according to Claim 1, **characterized in that**, starting from the calling communication arrangements (PBX1), the connection (IL-V) to the called communication arrangements (PBX2) is established over the IP-oriented network (IP-N).

3. Method according to Claim 1 or 2, **characterized in that** a connection is established over the IP-oriented network (IP-N) whenever a connection over the IP-oriented network (IP-N) is released for a connection with the communication arrangement (PBX2) identified by the phone number entered, and **in that** in other cases a connection is established over the communications network (ISDN).

4. Method according to Claim 3, **characterized in that** a check is performed as to whether a connection establishment is released over the IP-oriented network (IP-N) by means of a table (LCR) stored in the calling communication arrangement (PBX1), which table contains phone numbers released for connection establishment over the IP-oriented network (IP-N).

5. Method according to one of the preceding claims,
**characterized in that** the communication arrangements (PBX1, PBX2) are connected to the IP-oriented network (IP-N) in each case via an access arrangement (P1, P2) that connects the communications network (ISDN) to the IP-oriented network (IP-N), and **in that** an access of a communication arrangement (PBX1, PBX2) to the IP-oriented network (IP-N) is activated by means of a dialing of the respective access arrangement (P1, P2) performed over the communications network (ISDN).

6. Method according to Claim 5, **characterized in that** when the access of the calling communication arrangement (PBX1) to the IP-oriented network (IP-N) is activated, a unique first IP address (IP-A) in the IP-oriented network (IP-N) is assigned to an interface module (HLB) of the calling communication arrangement (PBX1) which implements the connection to the communications network (ISDN) by means of a first access arrangement (P1), and when the access of the called communication arrangement (PBX2) to the IP-oriented network (IP-N) is activated, a unique second IP address (IP-A) in the IP-oriented network (IP-N) is assigned to an interface module (HLB) of the called communication arrangement (PBX2) which implements the connection to the communications network (ISDN) by means of a second access arrangement (P2).

7. Method according to Claim 6, **characterized in that** in cases where an internal network second IP address (IP-A) in the IP-oriented network IP-N is assigned to the interface module (HLB) of the called communication arrangement (PBX2), and said second address (IP-A) is stored in the calling communication arrangement (PBX1), the connection (IP-V) between the calling communication arrangement (PBX1) and the called communication arrangement (PBX2) is established over the IP-oriented network (IP-N) by means of the second IP address (IP-A) immediately following activation of the accesses to the IP-oriented network (IP-N).

8. Method according to Claim 6, **characterized in that** in cases where no internal network second IP address (IP-A) in the IP-oriented network IP-N is assigned to the interface module (HLB) of the called communication arrangement (PBX2), the called communication arrangement (PBX2) logs onto a registration unit (ILS-S) connected to the IP-oriented network (IP-N) on activation of the access of the called communication arrangement (PBX2) to the IP-oriented network (IP-N) by the called communication arrangement (PBX2) by means of an individual identifier (ANLAGE MCH) denoting the called communication arrangement (PBX2).

9. Method according to Claim 8, **characterized in that** during the login of the called communication arrangement (PBX2), a temporary second IP address (IP-A) is stored in the registration unit (ILS-S) together with the identifier (ANLAGE MCH) denoting the called communication arrangement (PBX2), and **in that** the temporary second IP address (IP-A) for a connection establishment over the IP-oriented network (IP-N) from the calling communication arrangement (PBX1) can be polled by the registration unit (ILS-S) by means of the identifier (ANLAGE MCH).

## Revendications

1. Procédé d'établissement d'une connexion (IL-V) entre deux dispositifs (PBX1, PBX2) de communication par un réseau (IP-N) orienté IP,
dans lequel, après envoi d'un numéro d'appel identifiant un dispositif (PBX2) de communication appelé à un dispositif (PBX1) de communication appelant, on transmet un message d'activation au dispositif (PBX2) de communication appelé par un réseau (ISDN) de communication reliant le dispositif (PBX1) de communication appelant et le dispositif (PBX2) de communication appelé,
après l'envoi, on active un accès du dispositif (PBX1) de communication appelant au réseau (IP-N) orienté IP et, après la réception d'un message d'activation, on active un accès du dispositif (PBX2) de communication appelé au réseau (IP-N) orienté IP, et
après activation des accès, on établit la connexion (IL-V) entre les dispositifs (PBX1, PBX2) de communication par le réseau (IP-N) orienté IP,
**caractérisé**
**en ce que** l'on réalise le message d'activation par une sélection, effectuée par le réseau (ISDN) de communication, d'un port (12345) déterminé de connexion dans le dispositif (PBX2) de communication appelé,
en mettant fin à l'appel lancé par la sélection après son enregistrement par la deuxième installation (PBX2) de communication.

2. Procédé suivant la revendication 1,
**caractérisé**
**en ce que** l'on établit la connexion (IL-V) à partir des dispositif (PBX1) de communication appelant vers les dispositifs (PBX2) de communication appelés par le réseau (IP-N) orienté IP.

3. Procédé suivant la revendication 1 ou 2,
**caractérisé**
**en ce que** l'on effectue un établissement de connexion par le réseau (IP-N) orienté IP dans les cas dans lesquels il est libéré, par le dispositif (PBX2) de communication identifié par le numéro d'appel entré, une connexion par le réseau (IP-N) orienté IP, et
dans d'autres cas, on effectue un établissement de connexion par le réseau (ISDN) de communication.

4. Procédé suivant la revendication 3,
**caractérisé**
**en ce que** l'on effectue un contrôle sur le point de savoir si un établissement de connexion par le réseau (IP-N) orienté IP et libéré au moyen d'une table (LCR) mémorisée dans le dispositif (PBX1) de communication appelant et ayant des numéros d'appel libérés pour un établissement de connexion par le réseau (IP-N) orienté IP.

5. Procédé suivant l'une des revendications précédentes,
**caractérisé en ce que** l'on effectue une connexion des dispositifs (PBX1, PBX2) de communication par le réseau (IP-N) orienté IP par l'intermédiaire, respectivement, d'un dispositif (P1, P2) d'accès reliant le réseau (ISDN) de communication au réseau (IP-N) orienté IP et **en ce que** l'on effectue une activation d'un accès d'un dispositif (PBX1, PBX2) de communication au réseau (IP-N) orienté IP par une sélection, effectuée par le réseau (ISDN) de communication, du dispositif (P1, P2) d'accès respectif.

6. Procédé suivant la revendication 5,
**caractérisé**
**en ce que**, lors d'une activation de l'accès du dispositif (PBX1) de communication appelant au réseau (IP-N) orienté IP, il est affecté à un module (HLB) de connexion réalisant la connexion au réseau (ISDN) de communication du dispositif (PBX1) de communication appelant par un premier dispositif (P1) d'accès une première adresse IP (IP-A) univoque dans le réseau (IP-N) orienté IP et, lors de l'activation de l'accès du dispositif (PBX2) de communication appelé vers le réseau (IP-N) orienté IP à un module (HLB) de connexion réalisant la connexion au réseau (ISDN) de communication du dispositif (PBX2) de communication appelé par un deuxième dispositif (P2) d'accès, une deuxième adresse IP (IP-A) univoque dans le réseau (IP-N) orienté IP.

7. Procédé suivant la revendication 6,
**caractérisé**
**en ce que**, dans des cas dans lesquels il est affecté au module (HLB) de connexion du dispositif (PBX2) de communication appelé une deuxième adresse IP (IP-A) immanente au réseau dans le réseau (IP-N) orienté IP et cette deuxième adresse IP (IP-A) est mémorisée dans le dispositif (PBX1) de communication appelant, il est constitué immédiatement après l'activation des accès au réseau (IP-N) orienté IP la connexion (IP-V) entre le dispositif (PBX1) de communication appelant et le dispositif (PBX2) de communication appelé par l'intermédiaire du réseau (IP-N) orienté IP au moyen de la deuxième adresse IP (IP-A).

8. Procédé suivant la revendication 6,
**caractérisé**
**en ce que**, dans des cas dans lesquels il n'est pas affecté au module (HLB) de connexion du dispositif (PBX2) de communication appelé de deuxième adresse IP (IP-A) immanente au réseau dans le réseau (IP-N) orienté IP, il est effectué, par l'activation de l'accès du dispositif (PBX2) de communication appelé vers le réseau (IP-N) orienté IP par le dispositif (PBX2) de communication appelé au moyen d'une identification (ANLAGE MCH) individuelle caractérisant le dispositif (PBX2) de communication appelé, une demande du dispositif (PBX2) de communication appelé à unité (ILS-S) d'enregistrement raccordée au réseau (IP-N) orienté IP.

9. Procédé suivant la revendication 8,
**caractérisé**
**en ce que**, lors de la demande du dispositif (PBX2) de communication appelé, il est mémorisé une deuxième adresse IP (IP-A) temporaire, ensemble avec l'identification (ANLAGE MCH) caractérisant le dispositif (PBX2) de communication appelé dans l'unité (ILS-S) d'enregistrement, et
**en ce que** la deuxième adresse IP (IP-A) temporaire peut être interrogée par l'unité (ILS-S) d'enregistrement pour l'établissement d'une connexion par le réseau (IP-N) orienté IP du dispositif (PBX1) de communication appelant au moyen d'identification (ANLAGE MCH).
